# EUROPÄISCHE PATENTSCHRIFT

(11) **EP 0 716 992 B1**
(45) Veröffentlichungstag und Bekanntmachung des Hinweises auf die Patenterteilung: **05.04.2000**
(21) Anmeldenummer: 95119372.1
(22) Anmeldetag: 08.12.1995
(51) Int. Cl.: B65G 43/02

(54) **Verfahren und Anordnung zur Überwachung eines Fördergurtes**
Method and arrangement for monitoring a conveyor belt
Procédé et dispositif pour surveiller une bande transporteuse

(30) Priorität: 13.12.1994 DE 4444262
(43) Veröffentlichungstag der Anmeldung: 19.06.1996
(73) Patentinhaber: Continental Aktiengesellschaft, 30165 Hannover (DE)
(72) Erfinder: Schulze, Siegfried, D-47495 Rheinberg (DE); Scheuermann, Frank, D-45739 Oer-Erkenschwick (DE)

(56) Entgegenhaltungen:
- EP-A- 0 615 285
- DE-A- 1 781 133
- DE-A- 2 404 769
- DE-B- 1 233 324
- DE-B- 1 274 499
- DE-B- 1 276 546

## Beschreibung

Die Erfindung betrifft ein Verfahren zur induktiven Überwachung eines Fördergurtes und Warnung vor Längsrissen, mit in Gurtrichtung in Abständen aufeinanderfolgend eingelegten, die gesamte Gurtbreite überdeckenden, elektrisch leitfähigen Schleifen, denen jeweils ein Sender zugeordnet ist, und mit mindestens einer außerhalb des Gurtes ortsfest angeordneten Sende- und Empfangseinrichtung, wobei die Sender ihre Spannungsversorgung durch induktive Kopplung an eine als Primärspule wirkenden, fortlaufend erregten Wicklung der außerhalb des Gurtes ortsfest angebrachten Sende- und Empfangseinrichtung erhalten.
Darüber hinaus betrifft die Erfindung eine Überwachungs- und Warnanordnung an einem Fördergurt zur Durchführung des Verfahrens.

Bei den großen Bandstraßen mit breiten, endlos umlaufenden Fördergurten stellen solche Gurte aus nichtmetallischem Werkstoff, wie sie insbesondere zum Transport von Schüttgut benutzt werden, einen großen Wert dar. Längsrisse durch herabfallende scharfe Gegenstände sollten - wenn sie schon nicht völlig vermieden werden können - möglichst frühzeitig erkannt werden, um durch rasches Abschalten des Bandantriebs den entstandenen Schaden weitgehend zu begrenzen.

Aus dem Patent DE 12 33 324 ist eine berührungslos induktiv wirkende Überwachungsanordnung für Fördergurte bekannt, bei der auf dem Fördergurt Induktionsschleifen quer zur Laufrichtung angebracht sind. Außerhalb des Gurtes sind ortsfest Magneten und Empfängerspulen angeordnet. Fährt nun der Gurt mit der Induktionsschleife über einen Magneten hinweg, so wird in der Induktionsschleife ein Stromstoß induziert, der wiederum ein Signal in der ortsfesten Empfängerspule induziert.

Ist nun durch einen Riß der Stromfluß in der Induktionsschleife des Gurtes unterbrochen, so wird in dem Empfänger kein Signal festgestellt.

Mit Leiterschleifen und 〈Permanent-〉Magneten arbeitet auch die Vorrichtung nach der DE 17 81 133. Aber auch hier induziert der relativ zu einer Induktionsschleife bewegte Magnet lediglich einen mehr oder weniger großen Stromstoß. Wegen des unruhigen Laufs des Bandes ist mit größeren Schwankungen der jeweiligen Induktionsimpulse zu rechnen, wodurch eine zuverlässige Aussage über Fehlfunktionen nicht gegeben werden kann.

Da die durch Magneten in der Empfängerspule induzierten Spannungsstöße nur einzelne schwache Impulse sind, verwendet die DE 12 74 499 anstelle der auf dem Fördergurt angebrachten Induktionsschleife eine mit Spannungsquelle und Sender versehene Leiterschleife. Zur Energieversorgung dient eine in der Leiterschleife mitgeführte Spule, die als Sekundärspule eines ortsfesten, mit Strom gespeisten Elektromagneten wirkt. Darüber hinaus ist ortsfest eine Empfangseinrichtung installiert. Bei Bruch des Fördergurts wird die Leiterschleife zerstört und die Verbindung von Spannungsquelle zum Sender wird unterbrochen. Diese Signalunterbrechung wird als Schadensmeldung gedeutet.

Der Leistungsbedarf des gurtseitig mitgeführten Senders hat sich offenbar als zu groß erwiesen, so daß sich diese Anordnung in der Praxis nicht durchsetzen konnte.
Auch unterscheiden sich die einzelnen Sender nicht in ihren Signalen voneinander, so daß die Position eines ausgefallenen Senders auf dem Gurt nicht angegeben werden kann.
Da der Sender nicht hitzefest ist, kann er weder bei der Produktion des Fördergurtes noch nachträglich in den Gurt einvulkanisiert werden. Es ist vielmehr erforderlich, die Teile, wie z. B. die Sender, die durch Hitze oder Druck beschädigt werden könnten, durch hitzefeste Hülsen, die zuvor in den Gurt einvulkanisiert worden sind, zu schützen. Somit ergeben sich mehrere zusätzliche Arbeitsgänge bei der Herstellung dieser Fördergurte. Ebenso aufwendig gestaltet sich deren Reparatur bzw. der Ersatz einer defekten Leiterschleife. Dabei ist zu bezweifeln, daß die Kontaktgabe durch nachträglich angebrachte Anschlüsse dem rauhen Betrieb an Fördergurten gewachsen ist.
Die öffnungen der einvulkanisierten hitzefesten Hülsen können nach dem Bestücken mit den hitzeempfindlichen Sendern nicht durch einen Vulkanisiervorgang geschlossen werden.

Um bei berührungsloser induktiver Kopplung ein stärkeres Signal zu erhalten, schlägt die DE 12 76 546 vor, die einfache überwachungsschleife mit einer aus mehreren bzw. zahlreichen Windungen bestehenden Spule zu verbinden. Ortsfest ist eine mit einer Induktionsspule versehene Meßbrücke vorgesehen. Diese Meßbrücke wird bei überfahren einer an eine Überwachungsschleife angeschlossene Induktionsspule verstimmt. Erfolgt keine Verstimmung, so wird entweder keine Induktionsspule überfahren oder die jeweilige überwachungsspule ist durch Bandriß zerstört.

Da sich die einzelnen überwachungsschleifen nicht voneinander unterscheiden, läßt sich auch hierbei die genaue Position auf dem Gurt nicht angeben.

Ein zusätzliches Problem bei den beiden zuletztgenannten Anordnungen besteht darin, daß man bei Signalausfall nicht unterscheiden kann, ob der Gurt gerissen ist oder ob lediglich die überwachungsanordnung defekt ist und aus diesem Grunde nicht funktioniert.
Es besteht also bei den bekannten Anordnungen die Gefahr von Fehldeutungen.
In der Regel ist eine zuverlässige Auswertung so nicht möglich.

Die Aufgabe der Erfindung besteht darin, dem Betreiber eines Fördergurtes Informationen über den Fördergurt, d. h. Schlitzüberwachungsdaten, insbesondere Position und Zeitpunkt eines Gurtrisses, zukommen zu lassen.

Diese Aufgabe wird im Hinblick auf das eingangs genannte Verfahren erfindungsgemäß dadurch gelöst, daß die jeweils im Bereich der ortsfesten Sende- und Empfangseinrichtung befindliche Leiterschleife bezüglich der fortlaufend erregten Wicklung als Sekundärspule, und daß wiederum jeweils eine Datenträgerspule - bezüglich jeweils einer an die jeweilige Leiterschleife angeschlossene übertragerspule - als Tertiärspule für die Spannungs- bzw.
Stromversorgung des jeweiligen Senders wirkt, von dem während der Spannungsversorgung ein Dauersignal mit jeweils individueller Kennung in umgekehrter Richtung über die jeweilige Übertragerspule und wiederum von der daran angeschlossenen Leiterschleife induktiv an die Wicklung der ortsfesten Sende- und Empfangseinrichtung, die dem der Datenträgerspule gegenüberliegenden Rand zugeordnet ist, übertragen wird.
Im Hinblick auf die gattungsgemäße Anordnung wird die Erfindung durch den kennzeichnenden Teil des Patentanspruchs 3 gelöst.
Weitere Merkmale der Erfindung ergeben sich aus den Unteransprüchen.

Die Erfindung geht von der Idee aus, daß die Position eines Gurtrisses anhand eines Sendeausfalls im Bereich des Gurtrisses in Verbindung mit den Kennungen von benachbarten Sendern bestimmbar sein sollte.
Zusätzlich sollten die auf dem Fördergurt mitgeführten Sender auch bei einem Bandriß sendebereit oder zumindest ortbar sein.

Die Feststellung der Position eines Fehlers geschieht auf zweifache Weise: Die den Leiterschleifen zugeordneten Sender sind Transponderchips mit integrierten miniaturisierten Datencodeträgern, denen jeweils eine individuelle Kennung "eingebrannt" ist. Diese Kennung wird während des Sendevorgangs ausgestrahlt. Dadurch ist es während des normalen, d. h. fehlerfreien Betriebs möglich, anhand der jeweiligen Kennung die Position des jeweiligen Senders festzustellen.
Im Falle eines Gurtrisses wird die entsprechende, in dem Gurt eingelegte Leiterschleife durchtrennt und kann deshalb nicht mehr als Induktionsschleife dienen. Aus den Positionen der benachbarten Sender, die anhand ihrer jeweiligen Kennungen bestimmbar sind, und der Tatsache des Sendeausfalls an der defekten Leiterschleife kann die genaue Position der defekten Leiterschleife und damit des Gurtrisses angegeben werden. Darüber hinaus kann die Position einer defekten Leiterschleife dadurch festgestellt werden, daß die Datenträgerspule, an die der jeweilige Sender angeschlossen ist, Leistung in ausreichender Größe direkt von einer zusätzlichen Sende- und Empfangseinrichtung empfangen und umgekehr ein mit seiner Kennung versehenes Signal senden kann.

Da die Transponderchips nebst Datenträgerspulen hitzefest sind, können sie bereits während des Herstellungsprozesses der Fördergurte in diese einvulkanisiert werden. Ebenso können fertige Fördergurte nachträglich mit den erfindungsgemäßen Warnanordnungen ausgerüstet werden, ohne befürchten zu müssen, die Transponderchips durch einen Vulkanisiervorgang zu zerstören.
Bei einem Gurtriß kann die Leiterschleife ausgewechselt werden, ohne die Datenträgerspule mit dem Sender mit auswechseln zu müssen. Dies wirkt sich günstig auf die Reparaturkosten aus. Wegen der induktiven Kopplung zwischen Datenträgerspule und der an der Leiterschleife befindlichen übertragerspule sind hier weder Lötstellen noch sonstige störanfällige Kontakte vorhanden.

Die Querstege der Leiterschleifen sind in Längsrichtung des Gurtes in möglichst gleichen Abständen voneinander angeordnet. So ist nirgends ein übermäßig großer Abstand gegeben und es kann bereits bei einem kurzen Längsriß an jeder beliebigen Stelle des Gurtes eine Fehlermeldung durchgegeben werden.

Vorteilhafterweise wird die Amplitude der empfangenen Energie mit den von den Transpondern zu sendenden Signalen moduliert. Auf diese Weise werden gesonderte Sende- und Empfangskanäle mit dazugehörigen Antennen eingespart.

Im Falle der Zerstörung einer Leiterschleife sendet der Transponderchip nicht, da er dann nicht mit Energie versorgt wird. Die genaue Position der Leiterschleife wird dann anhand der Kennungen der Nachbarsender festgestellt.

Installiert man an dem den Sendern zugeordneten Rand der Fördergurte zusätzlich eine ortsfeste Sende- und Empfangsstation oder ein entsprechendes Handgerät, so kann man anhand der Tatsache, daß über die Leiterschleife kein Funkkontakt möglich ist, aber über das an der dem Sender zugeordnaten ortsfesten Einrichtung ein Signal wahrgenommen wird, auf einen Defekt der Leiterschleife schließen.

Mittels Ferritkernen kann die induktive Kopplung zwischen Datenträgerspule und übertragerspule optimiert werden. Werden auch die Leiterschleifen mit einer Spulenwicklung nebst Ferritkern versehen, so erhält man einerseits ein kräftiges, störunanfälliges Signal, andererseits treten keine gravierenden Streustrahlen auf, so daß ein ausgefallener Sender zuverlässig geortet werden kann.

Im folgenden wird die Erfindung anhand einiger Ausführungsbeispiele näher beschrieben. Es zeigt:
Fig. 1 eine Draufsicht auf einen Fördergurt mit einer darunter befindlichen, ortsfesten Sende- und Empfangseinrichtung;
Fig. 2 einen Fördergurt in Seitenansicht mit einer darüber befindlichen Sende- und Empfangseinrichtung;
Fig. 3 einen Querschnitt durch einen Fördergurt;
Fig. 4 die Verteilung der Leiterschleifen auf einem Fördergurt;
Fig. 5 einen Fördergurt im Querschnitt mit eingelegter Leiterschleife, übertragerspule und Datenträgerspule;
Fig. 6 eine Draufsicht auf eine Ausführungsform des erfindungsgemäßen Fördergurts mit nebeneinander angeordneter Leiterschleife und übertragerspule;
Fig. 7 eine Datenträgerspule mit einem daran angeschlossenen Sender;
Fig. 8 eine weitere Ausführungsform der Erfindung; und
Fig. 9 das dieser weiteren Ausführungsform entsprechende Ersatzschaltbild.

Wesentlicher Bestandteil der Anordnung zur überwachung eines Fördergurtes 2 sind in den Gurt eingelegte, elektrisch leitfähige Schleifen 6.

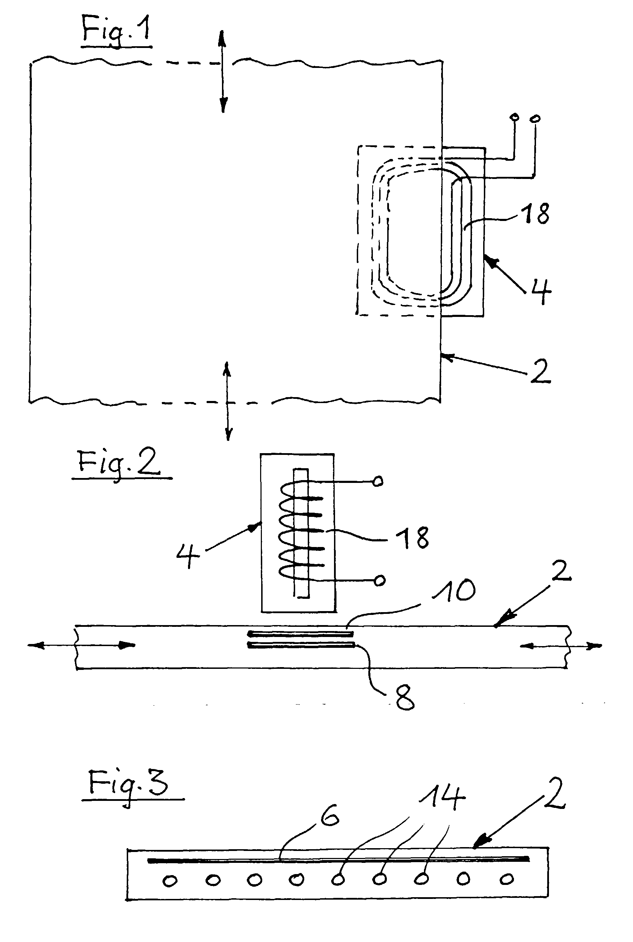

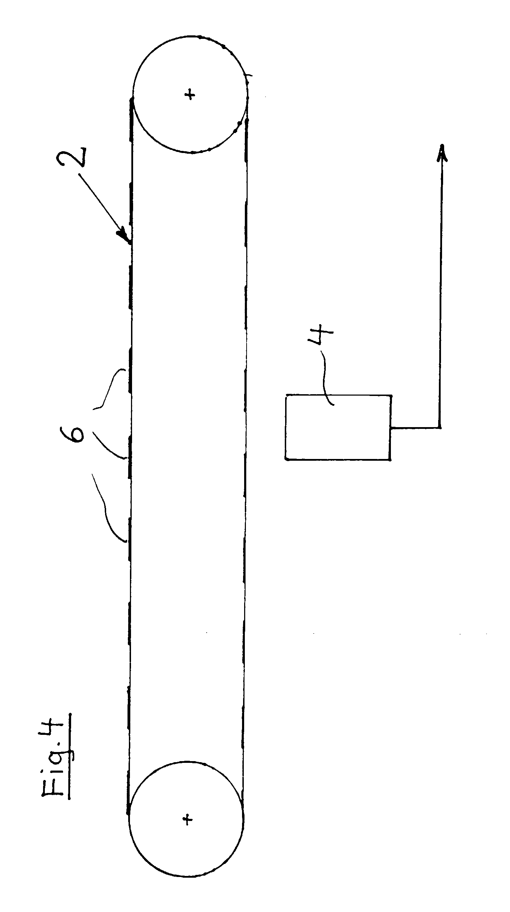

Wie in dem in Fig. 3 gezeigten Querschnitt durch einen Fördergurt 2 dargestellt, verfügen Fördergurte 2 üblicherweise über in Längsrichtung eingelegte Stahlseile 14. Aufgrund dieser Stahlseile 14 können die Gurte 2 beträchtlichen Zugspannungen standhalten; durch die eingelegten Stahlseile 14 kommen Querrisse ausgesprochen selten vor. Hingegen ist die Gefahr von Längsrissen niemals völlig auszuschließen. Derartige Längsrisse werden üblicherweise durch spitze Gegenstände verursacht, die die Tragseite des Fördergurtes 2 aufschlitzen.

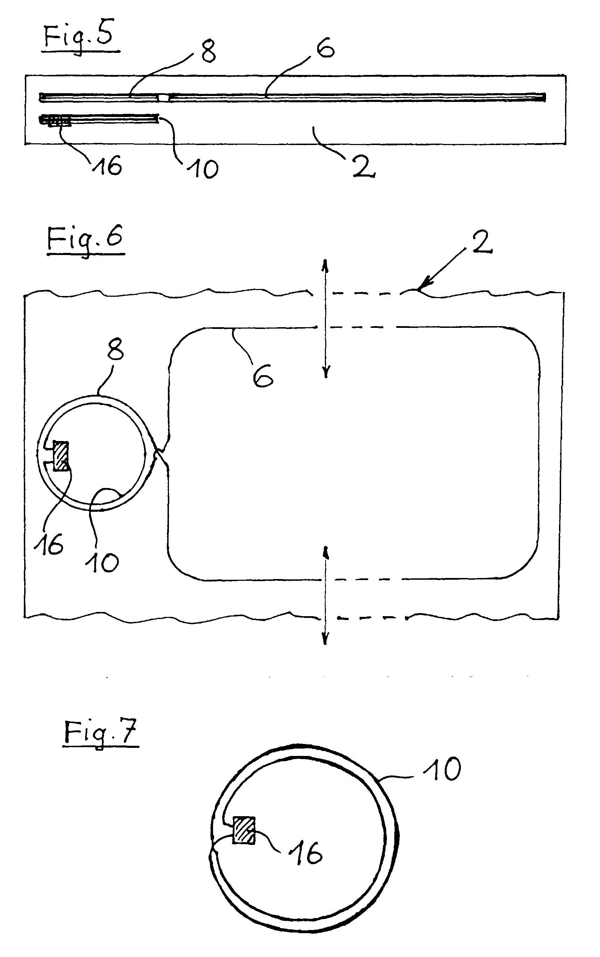

Um zu vermeiden, daß sich ein derartiger Längsschlitz über weite Teile des Gurtes 2 erstrecken kann, sind die als Warnsensoren vorgesehenen Leiterschleifen 6 in möglichst gleichen Abständen über die gesamte Länge des Gurtes 2 verteilt (Fig. 4). Auch überdecken sie annähernd die gesamte Gurtbreite (Fig. 5, 6, 8). Den einzelnen Leiterschleifen 6 ist jeweils ein Sender 16 zugeordnet. Dieser Sender 16 erhält seine Spannungs- bzw.
Stromversorgung induktiv über die Leiterschleife 6 von einer ortsfest außerhalb des Gurtes 2 angebrachten Sende- und Empfangseinrichtung 4.

Bei einem Gurtriß wird die in dem betreffenden Bereich befindliche Leiterschleife 6 durchtrennt. Dies hat zur Folge, daß die induktive Kopplung zwischen der ortsfesten Sende- und Empfangseinrichtung 4 und dem auf dem Gurt 2 mitgeführten Sender 16 durch die als Induktionsspule wirkende Leiterschleife 6 unterbrochen ist und der jeweilige Sender 16 weder Leistung empfangen noch Signale aussenden kann.

Erfindungsgemäß ist die Zuordnung zwischen Leiterschleife 6 und dem jeweiligen Sender 16 folgendermaßen:

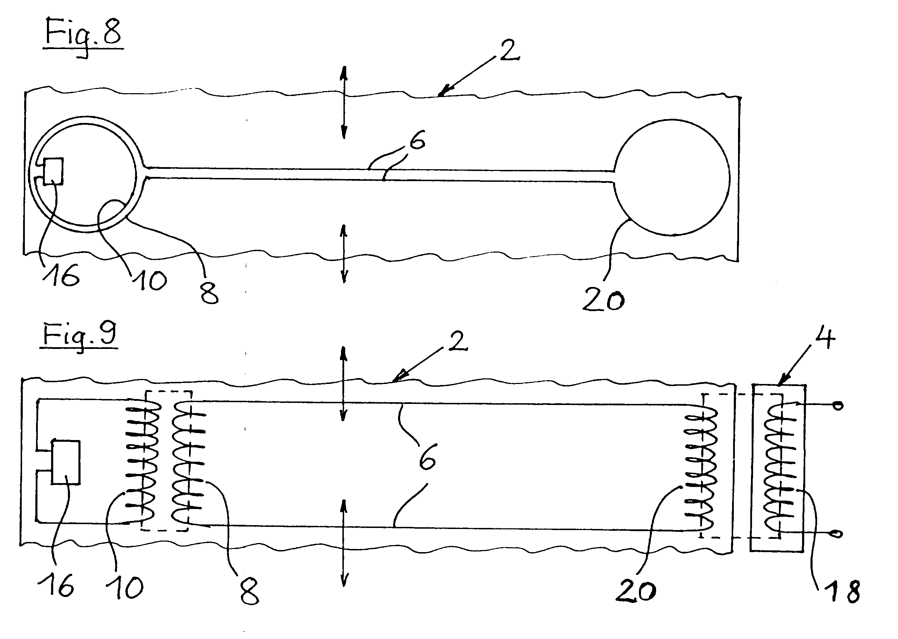

Die Leiterschleifen 6 sind an einem seitlichen Ende mit jeweils einer übertragerspule 8 verbunden. Dabei sind Leiterschleifen 6 und übertragerspulen 8 nicht hintereinander sondern nebeneinander auf dem Fördergurt 2 angeordnet (Fig. 6).

Über oder unter den übertragerspulen 8 sind jeweils Datenträgerspulen 10 in den Gurt 2 eingelassen. Diese Datenträgerspulen 10 weisen etwa dieselbe Größe wie die übertragerspulen 8 auf und sind zu ihnen deckungsgleich angeordnet. Datenträgerspule 10 und übertragerspule 8 haben keinerlei galvanischen Kontakt miteinander und sind lediglich induktiv miteinander gekoppelt.

An diese Datenträgerspulen 10 ist jeweils ein Sender 16 angeschlossen. Die Sender 16 erhalten ihre Spannungs- bzw. Stromversorgung durch induktive Kopplung an eine als Primärspule wirkende, fortlaufend erregte Wicklung 18 der außerhalb des Gurtes 2 ortsfest angebrachten Sende- und Empfangseinrichtung 4 (Fig. 1).

Die Anzahl der Windungen von übertragerspulen 8, Datenträgerspulen 10 und Sende- und Empfangseinrichtung 4 sind so gewählt und so zueinander ins Verhältnis gesetzt, daß eine optimale Anpassung an die Eingangsimpedanz des Senders 16 gewährleistet ist.

Bei einer weiteren Ausführungsform (Fig. 8, 9) der Erfindung ist die Leiterschleife 6 an dem der ortsfesten Sende- und Empfangseinrichtung 4 zugeordneten Ende zu einer Spule 20 mit mehreren Windungen ausgebildet. Durch geeignete Wahl der Windungszahlen der Spule 18 der ortsfesten Einrichtung 4 und Windungen 20 der Leiterschleife 6 ist eine optimale Impedanzanpassung und damit hoher Wirkungsgrad zwischen ortsfestem und beweglichem Teil der Anordnung gegeben.

Hat die Leiterschleife 6 lediglich die Ausdehnung einer quer in den Fördergurt 2 verlegten Zwillingslitze, so können die für das Nachrüsten erforderlichen Vulkanisierplatten kleingehalten werden.

Sollen Fördergurte 2 mit hohen Bandgeschwindigkeiten (ca 10m/s) überwacht werden, so ist es vorteilhaft, wenn die Wicklung 18 der ortsfesten Sende-und Empfangseinrichtung 4 eine relativ große Ausdehnung in Längsrichtung aufweist (Fig. 1).

Um den Strombedarf gering zu halten, ist die Reichweite der ortsfesten Sende- und Empfangseinrichtung 4 mit ca 10 - 15 cm so gewählt, so daß eine induktive Stromversorgung der auf dem Gurt 2 mitbewegten Sender 16 nur dann erfolgt, wenn sich die jeweilige Leiterschleife 6 in unmittelbarer Nähe über oder unter der Sende- und Empfangseinrichtung 4 befindet.
Befindet sich nämlich eine Leiterschleife 6 direkt oberhalb der ortsfesten Sende- und Empfangseinrichtung 4, so wird von der ortsfesten Wicklung 18 ein Sekundärstrom in der Leiterschleife 6 induziert. Der Induktionsstrom gelangt dann von der Leiterschleife 6 in die übertragerspule 8. Von der übertragerspule 8 wird dann ein Induktionsstrom in der Datenträgerspule 10 erzeugt, der den daran angeschlossenen Sender 16 speist.

Erfindungsgemäß sind die auf dem Fördergurt 2 mitbewegten Sender 16 Transponderchips mit integrierten miniaturisierten Datencodeträgern, in denen individuelle Kennungen eingebrannt sind. Diese Transponderchips geben ein Signal mit der jeweils individuellen Kennung solange ab, wie sie mit Strom versorgt werden, d. h. solange wie sich ihre Datenträgerspule 10 bzw. sich die jeweils angekoppelte Leiterschleife 6 im Bereich der ortsfesten Sende und Empfangseinrichtung 4 befindet.

Das Signal, welches der Transponderchip abgibt, gelangt auf dem gleichen Weg - nur in umgekehrter Richtung - an die ortsfeste Sende- und Empfangseinrichtung 4. Dabei wird das Datensignal dem Energiefluß amplitudenmäßig aufmoduliert.

Als (Träger)-Frequenz hat sich 130 kHz als vorteilhaft erwiesen. Aber auch andere Frequenzen sind denkbar.

Anhand der individuellen Kennungen der Transponderchips kann die Position der jeweiligen Chips auf dem Gurt 2 genau angegeben werden. Im Falle eines Gurtrisses und der damit verbundenen ausbleibenden individuellen Kennung, wenn die dabei zerstörte Leiterschleife 6 eine ortsfeste Sende- und Empfangseinrichtung 4 überquert, kann anhand der benachbarten intakten Sender 16 die Position des ausgefallenen Senders 16 ebenfalls genau angegeben werden.

Vorteilhafterweise sind die ortsfesten Sende- und Empfangseinrichtungen 4 an den kritischen Punkten der Fördergurte 2 (z. B. kurz vor und hinter den übergabepunkten) installiert. Bei ausgedehnten Bandstraßen wird man üblicherweise mehrere derartige ortsfeste Einrichtungen 4 vorsehen, die dann von einer zentralen Auswerteeinheit z. B. per Funk überwacht werden können.

Auf diese Weise kann ein Gurtriß kurzfristig festgestellt und durch rasches Abschalten des Fördergurtes eine Vergrößerung der Beschädigung vermieden werden.

### Bezugszeichenliste

- 2: Fördergurt
- 4: ortsfeste Sende-und Empfangseinrichtung
- 6: Leiterschleife
- 8: übertragerspule
- 10: Datenträgerspule
- 14: Stahlseile
- 16: Sender
- 18: Wicklung der Sende- und Empfangseinrichtung
- 20: Spulenwicklung der Leiterschleife

## Patentansprüche

1. Verfahren zur induktiven überwachung eines Fördergurtes (2) und Warnung vor Längsrissen,
- mit in Gurtrichtung in Abständen aufeinanderfolgend eingelegten,
- die gesamte Gurtbreite überdeckenden,
- elektrisch leitfähigen Schleifen (6),
- denen jeweils ein Sender (16) zugeordnet ist,
- und mit mindestens einer außerhalb des Gurtes ortsfest angeordneten Sende- und Empfangseinrichtung (4),
- wobei die Sender (16) ihre Spannungsversorgung durch induktive Kopplung an eine als Primärspule wirkenden, fortlaufend erregten Wicklung (18) der außerhalb des Gurtes (2) ortsfest angebrachten Sende- und Empfangseinrichtung(en) (4) erhalten,
**dadurch gekennzeichnet**,
- daß die jeweils im Bereich der ortsfesten Sende- und Empfangseinrichtung (4) befindliche Leiterschleife (6) bezüglich der fortlaufend erregten Wicklung (18) als Sekundärspule, und
- daß wiederum jeweils eine Datenträgerspule (10)
- bezüglich jeweils einer an die jeweilige Leiterschleife (6) angeschlossene übertragerspule (8) - als Tertiärspule für die Spannungs- bzw. Stromversorgung des jeweiligen Senders (16) wirkt,
von dem während der Spannungsversorgung ein Dauersignal mit jeweils individueller Kennung in umgekehrter Richtung über die jeweilige übertragerspule (8)
und wiederum von der daran angeschlossenen Leiterschleife (6) induktiv an die Wicklung (18) der ortsfesten Sende- und Empfangseinrichtung (4), die dem der Datenträgerspule (10) gegenüberliegenden Rand des Fördergurtes (2) zugeordnet ist, übertragen wird.

2. Verfahren nach Patentanspruch 1,
**dadurch gekennzeichnet,**
daß im Fall der Zerstörung einer Leiterschleife (6) der jeweilige Sender (16) direkt über die angeschlossene Datenträgerspule (10) von und zu einer zusätzlichen ortsfesten Sende- und Empfangseinrichtung (4) oder einem entsprechenden Handgerät, welches sich über oder unter der der Datenträgerspule zugeordneten Seite des Fördergurtes (2) befindet, empfängt und sendet.

3. Induktive überwachungs- und Warnanordnung an einem Fördergurt (2) zur Durchführung des Verfahrens nach einem der vorhergehenden Patentansprüche,
- mit in Gurtrichtung in Abständen aufeinanderfolgend eingelegten,
- die gesamte Gurtbreite überdeckenden,
- elektrisch leitfähigen Schleifen <6),
- denen jeweils ein Sender (16) zugeordnet ist,
- und mit mindestens einer außerhalb des Gurtes (2) ortsfest angeordneten Sende- und Empfangseinrichtung (4),
- wobei die Sender (16) ihre Spannungsversorgung durch induktive Kopplung an eine als Primärspule wirkenden, fortlaufend erregten Wicklung (18) der außerhalb des Gurtes (2) ortsfest angebrachten Sende- und
Empfangseinrichtung(en) (4) erhalten,
**dadurch gekennzeichnet,**
- daß die Leiterschleifen (6) jeweils an eine übertragerspule (8) angeschlossen sind,
- daß die den Leiterschleifen (6) jeweils zugeordneten Sender (16) jeweils an eine Datenträgerspule (10) angeschlossen sind,
wobei die Datenträgerspulen (10) wiederum an die jeweils zugeordneten übertragerspulen (8) induktiv gekoppelt sind,
- daß die jeweils im Bereich der ortsfesten Sende- und Empfangseinrichtung (4) befindliche Leiterschleife (6) bezüglich der fortlaufend erregten Wicklung (18) als Sekundärspule, und
- daß wiederum jeweils eine Datenträgerspule (10)
- bezüglich jeweils einer an die jeweilige Leiterschleife (6) angeschlossene übertragerspule (8) - als Tertiärspule der Spannungs- bzw. Stromversorgung des jeweiligen Senders (16) vorgesehen ist,
wobei die Sender (16) mit integrierten miniaturisierten Datencodeträgern versehene hitzebeständige Transponderchips sind, denen jeweils eine individuelle Kennung "eingebrannt" ist, und
von denen während der Spannungsversorgung ein Dauersignal mit der jeweils individuellen Kennung in umgekehrter Richtung über die jeweilige übertragerspulen (8) und wiederum von der daran angeschlossenen Leiterschleife (6) induktiv an die Wicklung (18) der ortsfesten Sende- und Empfangseinrichtung (4), die dem der Datenträgerspule (10) gegenüberliegenden Rand des Fördergurtes (2) zugeordnet ist, übertragbar ist.

4. Überwachungs- und Warnanordnung nach Patentanspruch 3,
**dadurch gekennzeichnet**,
daß die Leiterschleifen (6) und die Übertragerspulen (8) jeweils nebeneinander und quer zur Laufrichtung des Fördergurtes (2), und die ortsfest angebrachte Sende- und Empfangseinrichtung(en) (4) seitlich unter oder über dem Fördergurt angeordnet sind,
wobei sich die übertragerspulen (8) jeweils auf einer Seite des Fördergurts (2) befinden,
und die ortsfeste(n) Sende- und Empfangseinrichtung(en) (4) der den Übertragerspulen (8) abgewandten Seite des Fördergurtes (2) zugeordnet ist (sind).

5. Überwachungs- und Warnanordnung nach Patentanspruch 3 oder 4,
**dadurch gekennzeichnet,**
daß die Leiterschleifen (6) eine derartige Ausdehnung in Längsrichtung des Gurtes (2) und einen derartigen Abstand voneinander aufweisen,
daß die Querstege der Leiterschleifen (6) ungefähr äquidistant voneinander angeordnet sind.

6. Überwachungs- und Warnanordnung nach einem der Patentansprüche 3 - 5,
**dadurch gekennzeichnet,**
daß die Amplitude der empfangenen Energie mit den von den Transpondern zu sendenden Signalen modulierbar ist.

7. Überwachungs- und Warnanordnung nach einem der vorhergehenden Patentansprüche 3 - 6,
**dadurch gekennzeichnet,**
daß im Fall der Zerstörung einer Leiterschleife (6) der jeweilige Transponderchip (16) direkt über die angeschlossene Datenträgerspule (10) von und zu einer zusätzlichen ortsfesten Sende- und Empfangseinrichtung (4) oder einem entsprechenden Handgerät, welches sich über oder unter dem der Datenträgerspule zugeordneten Rand des Fördergurtes (2) befindet, empfangs- und sendebereit ist.

8. Überwachungs- und Warnvorrichtung nach einem der vorhergehenden Patentansprüche 3 - 7,
**dadurch gekenzeichnet,**
daß die Leiterschleifen (6) an dem der ortsfesten Sende-und Empfangseinrichtung (4) zugeordneten Rand des Fördergurtes (2) zu einer Spulenwicklung (20) ausgebildet sind.

9. Überwachungs- und Warnanordnung nach Patentanspruch 8,
**dadurch gekennzeichnet,**
daß sowohl zwischen Datenträgerspule (10) und übertragerspule (8) als auch zwischen Spulenwicklung (20) und ortsfester Wicklung (18) ein Ferritkern angeordnet ist.

10. Überwachungs- und Warnanordnung nach einem der Patentansprüche 3 - 9,
**dadurch gekennzeichnet,**
daß mehr als eine ortsfeste Sende- und Empfangseinrichtung (4) vorgesehen ist.

## Claims

1. Method of inductively monitoring a conveyor belt (2) and warning about longitudinal cracks,
- comprising electrically conductive loops (6),
- which are successively inserted at spacings from one another when viewed with respect to the belt direction,
- and which loops cover the entire belt width,
- a transmitter (16) being respectively associated with each of said loops,
- and comprising at least one transmitting and receiving means (4), which is disposed in a stationary manner externally of the belt,
- the transmitters (16) receiving their voltage supply by being inductively connected to a continuously excited winding (18), which acts as the primary coil, of the transmitting and receiving means (4), which is or are mounted in a stationary manner externally of the belt (2),
characterised
- in that the conductor loop (6), which is respectively situated in the region of the stationary transmitting and receiving means (4), acts as the secondary coil in respect of the continuously excited winding (18), and
- in that, in turn, a data carrier coil (10) respectively acts as the tertiary coil for the voltage or current supply of the respective transmitter (16) - in respect of a transformer coil (8) connected to the respective conductor loop (6) -,
from which transmitter a permanent signal, provided with a respective individual identification, is transferred during the voltage supply in the reverse direction via the respective transformer coil (8)
and, in turn, from the conductor loop (6), which is connected thereto, inductively to the winding (18) of the stationary transmitting and receiving means (4), which is associated with the edge of the conveyor belt (2) situated opposite the data carrier coil (10).

2. Method according to claim 1, characterised in that, in the event of a conductor loop (6) being destroyed, the respective transmitter (16) receives and transmits directly via the connected data carrier coil (10) from and to an additional stationary transmitting and receiving means (4) or a corresponding hand-operated appliance, which is situated above or below the side of the conveyor belt (2) associated with the data carrier coil.

3. Inductive monitoring and warning arrangement for a conveyor belt (2) for accomplishing the method according to one of the preceding claims,
- comprising electrically conductive loops (6),
- which are successively inserted at spacings from one another when viewed with respect to the belt direction,
- and which loops cover the entire belt width,
- a transmitter (16) being respectively associated with each of said loops,
- and comprising at least one transmitting and receiving means (4), which is disposed in a stationary manner externally of the belt (2),
- the transmitters (16) receiving their voltage supply by being inductively connected to a continuously excited winding (18), which acts as the primary coil, of the transmitting and receiving means (4), which is or are mounted in a stationary manner externally of the belt (2),
characterised
- in that the conductor loops (6) are each connected to a transformer coil (8),
- in that the transmitters (16), which are respectively associated with the conductor loops (6), are each connected to a data carrier coil (10),
the data carrier coils (10), in turn, being inductively connected to the respectively associated transformer coils (8),
- in that the conductor loop (6), which is respectively situated in the region of the stationary transmitting and receiving means (4), is provided as the secondary coil in respect of the continuously excited winding (18), and
- in that, in turn, a data carrier coil (10) is respectively provided as the tertiary coil for the voltage or current supply of the respective transmitter (16) - in respect of a transformer coil (8) connected to the respective conductor loop (6) -,
the transmitters (16) being heat-resistant transponder chips, which are provided with integrated miniaturised data code carriers, and on each of which chips is "branded" an individual identification, and
from which chips a permanent signal, provided with the respective individual identification, is transferable during the voltage supply in the reverse direction via the respective transformer coils (8)
and, in turn, from the conductor loop (6), which is connected thereto, inductively to the winding (18) of the stationary transmitting and receiving means (4), which is associated with the edge of the conveyor belt (2) situated opposite the data carrier coil (10).

4. Monitoring and warning arrangement according to claim 3, characterised in that the conductor loops (6) and the transformer coils (8) are each disposed adjacent one another and transversely relative to the direction of travel of the conveyor belt (2), and the transmitting and receiving means (4), which is or are mounted in a stationary manner, is or are disposed laterally below or above the conveyor belt, the transformer coils (8) each being situated on one side of the conveyor belt (2), and the stationary transmitting and receiving means (4) being associated with the side of the conveyor belt (2) remote from the transformer coils (8).

5. Monitoring and warning arrangement according to claim 3 or 4, characterised in that the conductor loops (6) have such an expansion in the longitudinal direction of the belt (2) and such a spacing from one another that the transverse webs of the conductor loops (6) are disposed approximately equidistantly from one another.

6. Monitoring and warning arrangement according to one of claims 3 - 5, characterised in that the amplitude of the received energy can be modulated with the signals which are to be transmitted by the transponders.

7. Monitoring and warning arrangement according to one of the preceding claims 3 - 6, characterised in that, in the event of a conductor loop (6) being destroyed, the respective transponder chip (16) is ready to receive and transmit directly via the connected data carrier coil (10) from and to an additional stationary transmitting and receiving means (4) or a corresponding hand-operated appliance, which is situated above or below the edge of the conveyor belt (2) associated with the data carrier coil.

8. Monitoring and warning arrangement according to one of the preceding claims 3 - 7, characterised in that the conductor loops (6) are provided on the edge of the conveyor belt (2), associated with the stationary transmitting and receiving means (4), to form a coil winding (20).

9. Monitoring and warning arrangement according to claim 8, characterised in that a ferrite core is disposed both between data carrier coil (10) and transformer coil (8) and between coil winding (20) and stationary winding (18).

10. Monitoring and warning arrangement according to one of claims 3 - 9, characterised in that more than one stationary transmitting and receiving means (4) is provided.

## Revendications

1. Procédé de surveillance par induction d'un ruban transporteur (2) et avertissement de l'apparition de déchirures longitudinales,
- comprenant des boucles électriquement conductrices (6).
- disposées dans la direction du ruban et se succédant à distances les unes des autres,
- couvrant la totalité de la largeur du ruban,
- à chacune desquelles un émetteur (16) est associé,
- et comprenant au moins un dispositif émetteur et récepteur (4) disposé en position fixe à l'extérieur du ruban.
- les émetteurs (16) recevant leur alimentation en tension par couplage par induction avec un enroulement (18) agissant en bobine primaire, excité en continu et faisant partie du ou des dispositif(s) émetteur(s) et récepteur(s) (4) placé(s) en position fixe à l'extérieur du ruban (2),
caractérisé
- en ce que chaque boucle conductrice (6) se trouvant dans la région du dispositif émetteur et récepteur (4) monté en position fixe agit par rapport à l'enroulement excité en continu (18) en bobine secondaire et
- en ce que de son coté une bobine porteuse de données (10)
- agit par rapport à une bobine transformatrice (8) connectée à chacune des boucles conductrices (8) en bobine tertiaire pour l'alimentation en tension ou en courant de l'émetteur particulier (10)
par lequel un signal continu ayant une caractéristique individuelle est transmis, pendant l'alimentation en tension, en sens inverse au moyen de la bobine transformatrice particulière (8)
et par ailleurs est transmis par la boucle conductrice (6) qui est connectée à cette dernière par induction à l'enroulement (18) qui fait partie du dispositif émetteur et récepteur (4) monté en position fixe et qui est associé au bord du ruban transporteur (2) qui est à l'opposé de la bobine porteuse de données (10).

2. Procédé selon la revendication 1,
caractérisé
en ce qu'en cas de destruction d'une boucle conductrice (6), l'émetteur particulier (16) reçoit et émet directement par l'entremise de la bobine connectée, porteuse de données (10) de et vers un dispositif émetteur et récepteur auxiliaire (4) monté en position fixe ou de et vers un appareil manuel correspondant qui se trouve au-dessus ou au-dessous du côté du ruban transporteur (2) qui est associé à la bobine porteuse de données.

3. Dispositif de surveillance et d'avertissement par induction placé sur un ruban transporteur (2) pour la mise en oeuvre du procédé selon l'une des revendications précédentes.
- comprenant des boucles électriquement conductrices (6),
- placées de manière à se succéder à distances les unes des autres dans la direction du ruban.
- couvrant la totalité de la largeur du ruban,
- à chacune desquelles un émetteur (16) est associé,
- et comprenant au moins un dispositif émetteur et récepteur (4) disposé en position fixe à l'extérieur du ruban (2),
- les émetteurs (16) recevant leur alimentation en tension par couplage par induction avec un enroulement (18) excité en continu, agissant en bobine primaire et faisant partie du ou des dispositif(s) émetteur(s) et récepteur(s) (4) placé(s) en position fixe à l'extérieur du ruban (2),
caractérisé
en ce que chacune des boucles conductrices (6) est connectée à une bobine transformatrice (8),
- en ce que chacun des émetteurs (16) associé aux boucles conductrices individuelles (6) est connecté à une bobine porteuse de données (10).
- les bobines porteuses de données (10) étant de leur côté couplées par induction avec les bobines associées transformatrices particulières (8).
- en ce que chacune des boucles conductrices (6) se trouvant dans la région du dispositif émetteur et récepteur (4) monté en position fixe agit en bobine secondaire par rapport à l'enroulement (18) excité en continu et
- en ce que de son côté une bobine porteuse de données (10)
- est prévue par rapport à chaque bobine transformatrice (8) connectée à une boucle conductrice particulière (6) pour servir de bobine tertiaire de l'alimentation en tension ou en courant de l'émetteur particulier,
les émetteurs (16) étant des puces de transpondeur résistant à la chaleur, équipées de porteurs intégrés miniaturisés de codes de données et à chacune desquels une caractéristique individuelle est conférée par "brûlure" et
par lesquelles un signal continu, dont chacun a une caractéristique individuelle, peut être transmis, pendant l'alimentation en tension, dans le sens inverse au moyen de la bobine transformatrice particulière (8) et par ailleurs peut être transmis par la boucle conductrice (8) connectée à cette dernière par induction à l'enroulement (18) faisant partie du dispositif émetteur et récepteur (4) qui est monté en position fixe et qui est associé au bord du ruban transporteur (2) qui est du côté opposé de celui de la bobine porteuse de données (10).

4. Dispositif de surveillance et d'avertissement selon la revendication 3,
caractérisé
en ce que les boucles conductrices (6) et les bobines transformatrices (8) sont juxtaposées et perpendiculaires au sens de défilement du ruban transporteur (2) et le ou les dispositif(s) émetteur(s) et récepteur(s) (4) monté(s) en position fixe est (sont) disposé(s) latéralement au-dessous ou au-dessus du ruban transporteur,
les bobines transformatrices (8) se trouvant sur un côté du ruban transporteur (2),
et le ou les dispositif(s) émetteur(s) et récepteur(s) (4) monté(s) en position fixe est (sont) associé(s) au côté du ruban transporteur (2) qui est tourné à l'opposé de celui des bobines transformatrices (8).

5. Dispositif de surveillance et d'avertissement selon la revendication 3 ou 4,
caractérisé
en ce que les boucles conductrices (6) ont une extension telle dans la direction de la longueur du ruban (2) et sont à une distance telle les unes des autres
que les branches transversales des boucles conductrices (6) sont à peu près équidistantes les unes des autres.

6. Dispositif de surveillance et d'avertissement selon l'une des revendications 3-5,
caractérisé
en ce que l'amplitude de l'énergie reçue est modulable par les signaux devant être émis par les transpondeurs.

7. Dispositif de surveillance et d'avertissement selon l'une des revendications 3-6,
caractérisé
en ce qu'en cas de la destruction d'une boucle conductrice (6), la puce transpondeur correspondante (16) est prête à la réception et à l'émission, directement au moyen de la bobine connectée, porteuse de données (16), de et vers un dispositif émetteur et récepteur auxiliaire (4) monté en position fixe ou de et vers un appareil manuel correspondant qui se trouve au-dessus ou au-dessous du bord du ruban transporteur (2) qui est associé à la bobine porteuse de données.

8. Dispositif de surveillance et d'avertissement selon l'une des revendications précédentes 3-7,
caractérisé
en ce que les boucles conductrices (6) sont réalisées en un enroulement de bobine (20) sur le bord du ruban transporteur (2) qui est associé au dispositif émetteur et récepteur (4) monté en position fixe.

9. Dispositif de surveillance et d'avertissement selon la revendication 8,
caractérisé
en ce que des noyaux de ferrite sont disposés d'une part entre la bobine porteuse de données (10) et la bobine transformatrice (8) et d'autre part entre l'enroulement de bobine (20) et l'enroulement (18) occupant une position fixe.

10. Dispositif de surveillance et d'avertissement selon l'une des revendications 3-9,
caractérisé
en ce que plus d'un dispositif émetteur et récepteur (4) monté en position fixe est prévu.
